# EUROPEAN PATENT SPECIFICATION

(11) **EP 4 365 779 B1**
(45) Date of publication and mention of the grant of the patent: **06.08.2025**
(21) Application number: 22205446.2
(22) Date of filing: 04.11.2022
(51) Int. Cl.: G06N 20/00, G06N 5/02, G06N 5/04, G06F 11/07

(54) **METHOD AND DEVICES FOR MONITORING PERFORMANCE DATA OF AN AI MODEL**
VERFAHREN UND VORRICHTUNGEN ZUR ÜBERWACHUNG VON LEISTUNGSDATEN EINES KI-MODELLS
PROCÉDÉ ET DISPOSITIFS DE SURVEILLANCE DE DONNÉES DE PERFORMANCE D'UN MODÈLE D'IA

(43) Date of publication of application: 08.05.2024
(73) Proprietor: Helsing GmbH, 81671 Munich (DE)
(72) Inventor: ADLER, Antonia, Munich 81671 (DE); WANKA, Jean-Marc, Munich 81671 (DE); KRAH, Moritz, Munich 81671 (DE)
(74) Representative: Rummler, Felix

(56) References cited:
- EP-A1- 4 071 670
- US-A1- 2021 133 632
- US-A1- 2021 390 455

## Description

### BACKGROUND OF THE INVENTION

In a variety of examples, artificial intelligence (AI) or machine learning (ML) models are deployed on different edge devices (also referred to herein as terminal devices or platforms) within a computing system. For example, in a military context, such AI models may be deployed on one or more drones that are used for image recognition applications and, based thereon, to produce a military situation report.

During or after operation of said edge devices, difficulties arise with respect to detecting, monitoring and/or notifying performance problems of the deployed AI models. For example, different edge devices may deploy the same or similar models in different circumstances, such as in different areas, during different time periods or to fulfil different purposes, i.e. are used for different applications. At the same time, the performance of said models needs to be constantly improved, in particular in rapidly-changing environments where models might otherwise fail their purpose. For model improvement, in turn, performance insufficiencies or other performance problems need to be monitored and notified.

US 20210/133632 A1 discloses improved systems and methods for improved management of models for data science can facilitate seamless collaboration of data science teams and integration of data science workflows. Systems and methods provided herein can provide an open, unified platform to build, validate, deliver, and monitor models at scale. Systems and methods of the present disclosure may accelerate research, spark collaboration, increase iteration speed, and remove deployment friction to deliver impactful models. In particular, users may be allowed to visualize statistics about models and monitor models in real-time via a graphical user interface provided by the systems.

US 2021/0390455 Al relates to systems and methods for monitoring and managing machine learning models and related data. Histogram structures can be used to aggregate streams of numerical data for storage and metric calculations. Drift in such data can be identified and monitored over time. When significant drift is detected and/or when model accuracy has deteriorated, models can be automatically refreshed with updated training data and/or replaced with one or more other models. A model controller is used to automate model monitoring and management activities across multiple prediction environments where models are deployed and prediction jobs are executed.

EP 4 071 670 A1 is directed to a technical system for a centralized generation of a plurality of trained, retrained and/or monitored machine learning models to be executed decentral.

Current implementations that are used to detect said performance problems, however, are slow, inefficient, error-prone and/or cumbersome. The present invention therefore aims to improve automated model performance monitoring and problem detection within a system comprising one or more platforms (e.g. edge devices) on which an AI model is deployed.

### SUMMARY

The present invention is defined by the appended independent claims. Advantageous embodiments are defined in the dependent claims.

According to the invention, there is provided a computer implemented method comprising: monitoring (110), by a platform (320A), wherein the platform (320A) is an edge device of a computing system (300) comprising a central server communicatively coupled to the platform (320A), performance data of an algorithm and/or artificial intelligence, Al, model deployed on the platform (320A);based on a predetermined set of rules (330A) provided by the central server, determining (120, 240) one or more performance criteria, comprising one or more performance thresholds, for the algorithm and/or AI model, wherein the set of rules (330A) is associated with the algorithm, the AI model and/or the platform (320A); comparing (130), by the platform (320A), the monitored performance data to the one or more performance criteria; triggering (140) an alert event based on the comparison of the monitored data to the one or more performance criteria, wherein triggering (140) the alert event comprises transmitting (150) the alert from the platform to the central server, wherein transmitting (150) the alert comprises including the monitored performance data underlying the trigger event and the one or more performance criteria; and amending, based on the alert, the same algorithms and/or AI models deployed on all of a plurality of platforms.

According to the invention, one or more algorithms and/or AI models are deployed on one or more platforms communicatively coupled to the central server. All of a plurality of algorithms and/or AI models are deployed on different platforms of a plurality of platforms. A respective (different) predetermined set of rules may be provided by the central/remote server for each of the plurality of algorithms and/or AI models. Additionally, or alternatively, the set of rules may comprise different rules for different algorithms, AI models and/or platforms.

The platform is an edge device (of a computing system comprising the central server). The above described monitoring, determining, comparing or triggering steps are each be performed, by the platform (the edge device) on which the algorithms and/or AI models are deployed

The predetermined set of rules includes the one or more criteria, e.g. the thresholds. In other words, the predetermined set of rules provided by the central server may represent the one or more criteria.

The one or more performance criteria are compared to respectively different parts and/or subsets of the monitored data.

The method defined above allows for a central regulation of locally implemented rules for automatically detecting performance problems of algorithms and/or AI models deployed on one or more platforms (edge devices). The set of rules, based on which the performance problems are detected, can be dynamically adjusted for all platforms (edge devices) communicatively coupled to the central server, thereby improving performance problems detection efficiency.

For example, the central server may determine a respective set of rules to be provided to or for one or more of a plurality of platforms (edge devices). Generally, the same or a different set of rules (e.g. criteria or thresholds) may be provided for a plurality of platforms (edge devices), in particular if the same, a similar, or the same type of AI or ML model is deployed on the plurality of platforms (edge devices), respectively (the terms AI model and ML model may be used interchangeably herein). Correspondingly, the same or a different set of rules may be provided to a respective one of a plurality of platforms (edge devices/nodes) if different models are deployed on different platforms (edge devices/nodes) of the plurality of platforms (edge devices/nodes).

Moreover, by providing the set of rules, it may be determined which type of alert event may be triggered. In other words, the provided set of rules, in particular a number of different rules included in the set of rules, form basis for a number of possible alert events. Hence, the type and/or number of alert events may be defined, at least in part, by the provided set of rules, thereby increasing the efficiency of the performance problem detection and handling process.

According to another embodiment, the steps of monitoring the data, determining the one or more performance criteria and comparing the monitored data to the one or more performance criteria is performed by the platform.

In other words: Whereas the central server provides the set of rules that may comprise the performance criteria or based on which the performance criteria are detected, other method steps, in particular the step of comparing the monitored data to the one or more performance criteria, are performed by the platform (edge device). In this manner, the monitored data leading to (i.e. underlying) the triggering of the alert event may be generated, even if the platform (edge device), such as a drone used for military applications, is temporarily disconnected from the central server, e.g. due to absent or disturbed signal reception.

According to the invention, the platform (edge device) determines trigger data including the monitored data that results in the trigger event. More particularly, monitored data resulting in a trigger event may be data that meets a criterion of the one or more criteria, e.g. exceeds or falls below a threshold. Further, the trigger data comprise the criterion to which the monitored data of the trigger data was compared.

Hence, for example, the trigger data may be forwarded to the central server at a later point in time. In that manner, failsafe operation of the performance problem detection and handling process may be enabled or improved.

According to another embodiment, the step of triggering the alert event is performed by the platform, in particular by an alerting system comprised by the platform.

In that manner, the alert event may be directly processed at the platform (edge device), thereby being able to react on the alert event in an individual, fast and efficient manner. For example, the alerting system may include means to adjust the algorithm and/or AI model, input data of the AI mode and/or an application of the algorithm and/or AI model or the platform (edge device) based on the triggered alert event.

According to another embodiment, the performance data comprises input and/or output data. For example, specific criteria are determined for specific types of data, such as input and/or output data, thereby increasing efficiency of the performance problem detection and handling process.

According to another embodiment, triggering the alert event comprises: transmitting an alert from the platform to the central server, preferably indicating at least one of a time and/or location at which the alert event was triggered, the monitored data underlying the trigger event and the one or more criteria, and/or rules of the set of rules underlying the trigger event. In other words: The alerts that are triggered based on the predetermined set of rules (e.g. criteria or thresholds) may be sent to the central server from one or more, in particular a plurality of, platforms (edge devices) and can be centrally assessed or evaluated. In this manner, the set of rules may be adjusted (e.g. by providing a new set of rules to the at least one platform (edge device) and/or one ore more, in particular all, of a plurality of platforms (edge devices)) taking into account the monitored data to which the criterion is compared. Thereby, the set of rules may be centrally fine adjusted in order to increase efficiency and/or accuracy of the performance problem detection mechanism.

Moreover, the same or similar algorithms and/or AI models deployed on all of a plurality of platforms (edge devices), arc amended (adjusted or corrected) based on the alert sent to the central server by one or more platforms (edge devices). Hence, overall accuracy of algorithms and/or AI models performed on a plural of platforms (edge devices) may be enhanced.

According to another embodiment, triggering the alert event comprises: transmitting a, or the, alert to an operator of the platform and/or to a control system of the platform and/or storing a, or the, alert on the platform and/or the central server.

The operator of the platform (edge device) and/or the control system of the platforms (edge device) may directly react on the alert event, e.g. by adjusting the algorithm and/or AI model, adjusting input data of the algorithm and/or AI model and/or adjusting the application of the algorithm and/or AI model.

The alert event and/or the underlying data my be stored in order to be transmitted to the central server or used by the platform (edge device) (e.g. the operator and/or the control system) at a later point in time, in particular in conjunction or comparison with one or more other triggered alert events.

According to another embodiment, the set of rules and/or the criteria are determined by an operator of the platform.

The set of rules and/or the criteria may be determined subsequent or prior to (e.g. if the set of rules comprises the criteria) providing the set of rules, e.g. transmitting the set of rules to the platform (edge device).

For example, the criteria compared to the monitored data can be customized by the operator within the framework set by the received set of rules (or the set of rules to be received). The operator may adapt the set of rules (e.g. may only choose a subset of provided criteria to be compared to the monitored data) to characteristics of the platform (edge device), the algorithm and/or AI model deployed thereon and/or an intended use/application of the platform (edge device) or the algorithm and/or AI model. Beyond that, the operator may dynamically add, delete, amend and/or replace criteria based on the provided set of rules and, for example, on (a type of) the monitored data in order to more efficiently and/or more accurately detect performance problems.

The set of rules may be pulled by the platform (edge device). In particular, updates of the set of rules may be regularly pulled by the platform (edge device). Thereby, the set of rules and/or the updated set of rules may have an (almost) immediate effect.

According to another embodiment, the set of rules is determined or predetermined based on one or more characteristics of the platform, the deployed algorithm and/or the AI model.

For example, the central server may have received and/or stored an indication of characteristics of the at least one platform (edge device) and/or the algorithm and/or AI model deployed thereon. More particularly, the at least one platform (edge device) or each of a plurality of platforms (edge devices) may have associated therewith a respective unique identifier, ID. Based on said indication, a set of rules to be provided for, e.g. sent to, the platform (edge device) is determined. For example, a number of sensible criteria is selected that is suitable for performance problem detection for the platform (edge device), the algorithm and/or AI model deployed thereon and/or the intended use of the platform (edge device). Thereby, a determination of suitable criteria, e.g. by an operator of the platform (edge device), can be performed in a more efficient way.

According to another embodiment, the set of rules comprises an ontology for defining and/or determining the performance criteria.

The ontology may contain different types of monitored or monitorable data, such as output statistics (e.g. uncertainty) or input statistics (e.g. number of pixels), and/or relation keywords (e.g. exceeds, contains, is equal to a certain value or type of value). Monitored or monitorable data and relation keywords can be added and/or removed to/from the ontology.

In that manner, an operator of the platform (edge device) is enabled to determine criteria to be compared to monitored data based on the ontology in a fast and efficient manner. Further, by providing the ontology by the central server, available or selectable criteria may be centrally defined and/or specifically provided for or to the platform (edge device), e.g. based on the characteristics of the platform (edge device) and/or the deployed algorithm and/or AI model.

According to another embodiment, the computer implemented method further comprises: applying an access restriction to a, or the, stored alert based on access restrictions to the platform, the algorithm and/or AI model and/or the monitored data.

Thereby, data security is ensured when handling potential sensitive data included in the alerts on the central server.

According to another embodiment, triggering an alert event comprises: indicating that one or more of the monitored data meets one or more of the determined criteria, in particular exceeds or falls below one or more of the determined thresholds; and/or indicating that a, preferably predetermined, critical number of determined criteria is met by the monitored data.

For example, the alerts defined above may indicate that one or more the monitored data meets one or more of the determined criteria and/or that the critical number of determined criteria is met.

For example if the set of rules is predetermined such that a large number of alert events is triggered, a throttling functionality may be implemented so that neither the platform (edge device) nor the central server experiences performance problems due to an excessive large number of alert events triggered/received. In other words, an alert about an alerting overload may be provided to the platform (edge device) (e.g. the operator or the alerting system of the platform (edge device)) and/or to the central server.

Additionally, or alternatively, once it is indicated that the monitored data meets a criterion (i.e. an alert status is set for said criterion), said criterion is, at least temporarily, excluded from being compared to the monitored data. Thereby, alerts associated with said criterion are indicated once, rather than continuously, thereby improving performance of the system, in particular avoiding system performance problems due to an alert overload.

According to another embodiment, the one or more determined criteria are each associated with a respective priority level, and wherein triggering an alert event comprises: indicating that a, preferably predetermined, critical number of determined criteria above a certain, in particular predetermined, priority level is met by the monitored data.

In this manner, levels of severity of performance problems may be indicated, e.g. output to an operator of the platform. Further, system performance problems due to an alert overload associated with low priority level criteria can be avoided.

According to another embodiment, the algorithm and/or AI model is a first algorithm and/or AI model and wherein the method further comprises: monitoring output data of a compute graph, in particular a second algorithm and/or AI model of the compute graph, the compute graph comprising the first AI model; wherein the one or more performance criteria are determined based on the output data of the compute graph.

The compute graph, e.g. algorithms and/or AI models of the compute graph, may comprise a plurality of connected algorithms and/or AI models deployed on the same and/or on different platforms.

For example, the set of rules may indicate dependent criteria, the dependent criteria being dependent on the output data of the compute graph, e.g. output data of one or more algorithms comprised by the compute graph different from the first algorithm and/or AI model.

In this manner, the output of connected (e.g. parent) nodes of the first algorithm and/or AI model within the compute graph may be taken into account when determining the performance criterion/criteria, thereby adjusting the criterion/criteria more accurately to the first algorithm and/or AI model.

According to another embodiment, the algorithm and/or AI model is a first algorithm and/or AI model and wherein the one or more performance criteria are determined based on output data of a second algorithm and/or AI model, in particular of a second algorithm and/or AI model deployed on the same or another platform.

Thereby, an additional control mechanism is implemented. In one example, the first and second algorithms and/or AI models are both deployed on the same platform (edge device). In another example, the second algorithm and/or AI model is deployed on another platform. The second algorithm and/or AI model may be a different from, similar or (substantially) equal to the first algorithm and/or AI model.

For example, when output data of both the first and second algorithms and/or AI models do not meet the at least one performance criteria, i.e. lie within an acceptable range, the output data of both algorithms and/or AI models may still differ to an extent that may indicate a performance problem of at least one of the two algorithms and/or AI models.

According to another, possibly independent embodiment, there is provided a data processing platform comprising means for carrying out any of the above mentioned methods.

According to another, possibly independent embodiment, there is provided a data processing system comprising a central server and at least one platform, in particular the above mentioned platform, the system comprising means for carrying out any of the above mentioned methods.

According to another, possibly independent embodiment, there is provided a computer-readable medium comprising instructions which, when executed by a data processing device or system, in particular the above mentioned data processing platform or the above mentioned system, cause the data processing platform or system to carry out the method of any of the preceding claims.

### BRIEF DESCRIPTION OF THE DRAWINGS

The present invention may be better understood from reading the following description of non-limiting embodiments, with reference to the attached drawings, wherein:
- Fig. 1: shows a computer implemented method for triggering an alert event;
- Fig. 2: shows a method for determining performance thresholds;
- Fig. 3: shows a system operable to perform the method shown in fig. 1 and/or the method shown in fig. 2.

### DETAILLED DESCRIPTION OF THE PREFERRED EMBODIMENTS

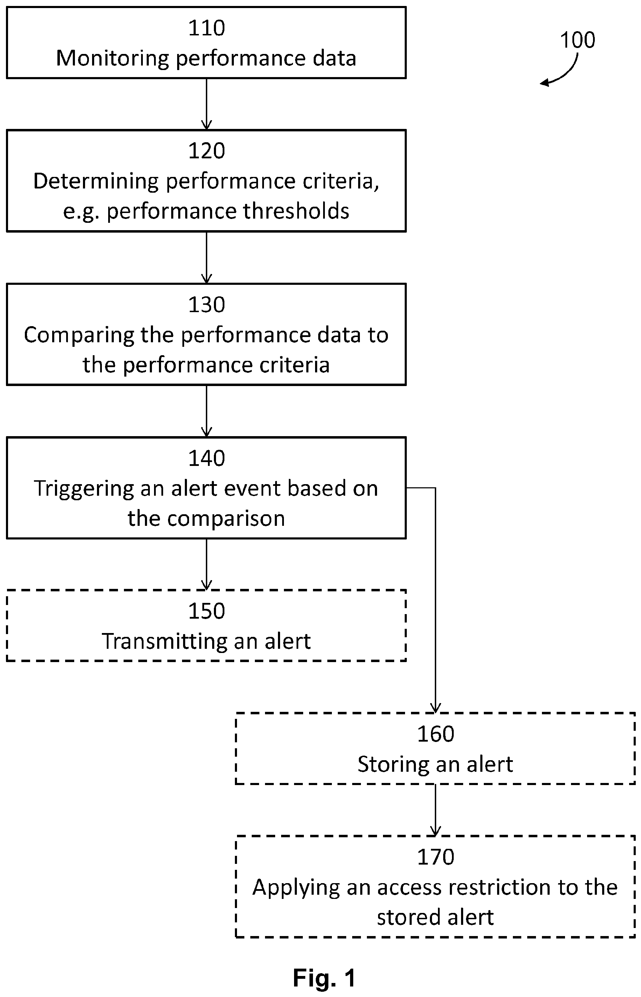

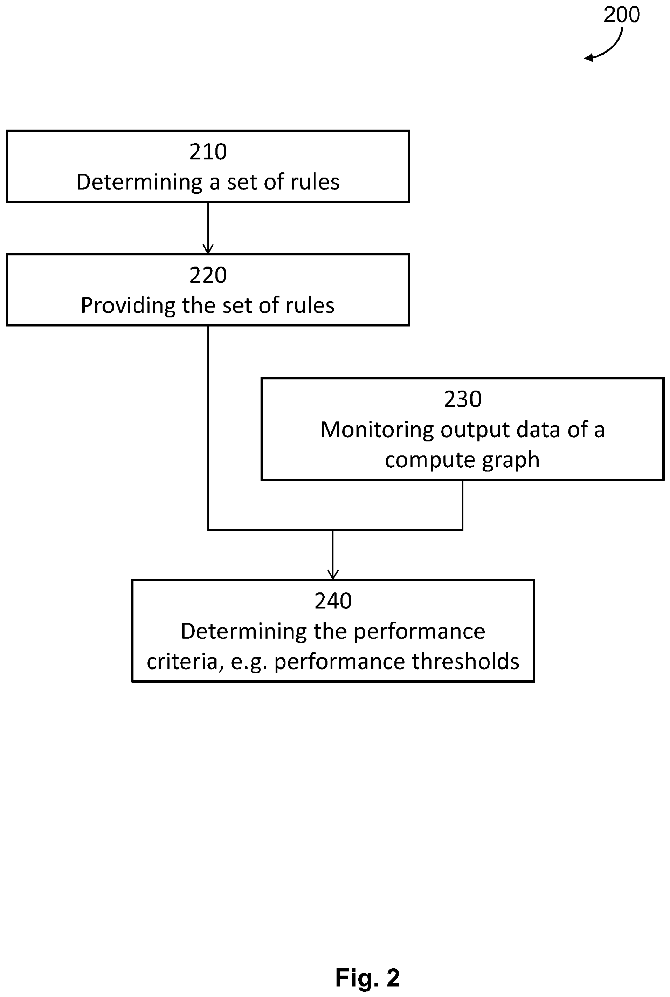

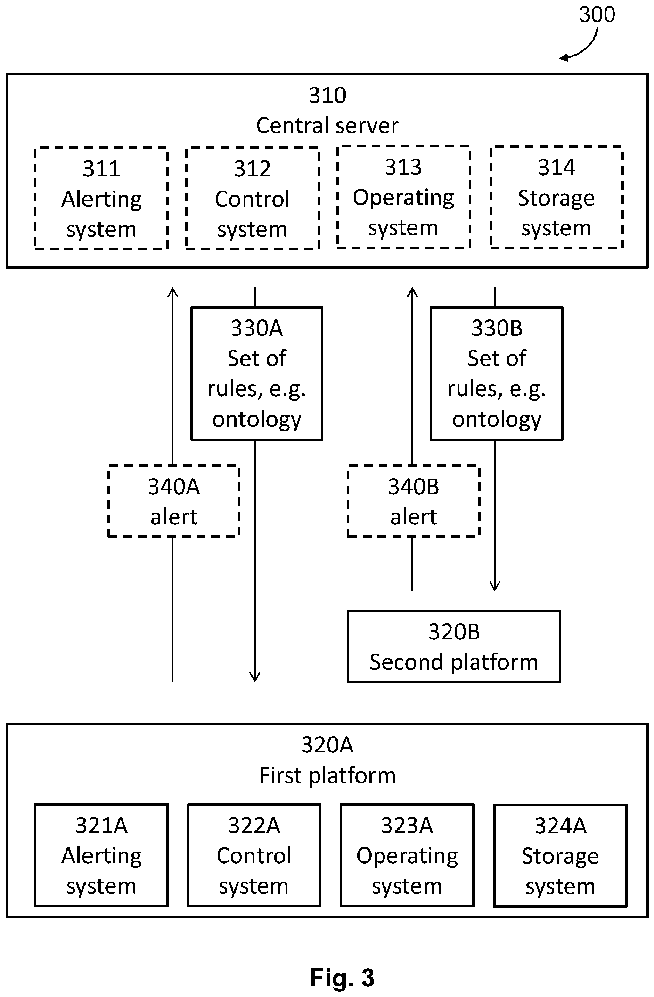

**Figure 1** shows a computer implemented method 100, in particular a method for triggering an alert event. The method 100 and/or the method 200 described below with reference to **figure 2** may be performed by one or more devices of a system 300 described in more detail below with reference to **figure 3****.**

The system 300 comprises a central server 310 and a plurality of platforms 320. In the present example, a first platform 320A and a second platform 320B are shown, that may have an identical or similar structure. The platforms 320 may comprise, e.g. consist of, autonomous platforms, such as vehicles, submarines and/or flying objects. In one example, the platforms 320 comprise a plurality of drones. On the platforms 320, one or more algorithms and/or artificial intelligence (AI) models are deployed, allowing the platforms 320 to autonomously perform specific tasks or applications. In the present application, the terms "AI model" and "(trainable) algorithm" may be used interchangeably.

In one example, the platforms 320 (drones) detect sensor data, such as image data, in order to classify objects and/or signals included in the image data. Based on the classification, a (military) status report may be generated. In another example, the platforms 320 comprise a plurality of autonomous vehicles that may follow a route and/or be in a traffic situation. In rapidly-changing environments, for example in a military context or traffic situations, reliable operation of the platforms as well as the ability of fast adjustments is crucial.

The below mentioned methods and systems aim for automated problem detection and notification as well as efficient troubleshooting and/or improving the algorithms and/or AI models deployed on the platforms.

Referring now to **figure 1****,** which illustrates the method 100. The method 100 comprises a first step 110, in which performance data of an algorithm and/or an AI model deployed on a platform is monitored. Performance data of the AI model may be input and/or output data of the AI model. Output data of the AI model may, for example, be a prediction, a confidence of a prediction (in particular a mean uncertainty of a prediction), a classification (in particular a prediction for a classification, e.g. of a tracked object) and/or bounding boxes (of a tracked object). Input data of the AI model may, for example, be sensor data, such as image data, and/or radiofrequency data.

The platform may be one of a plurality of platforms, such as one of the platforms 320A or 320B (referred to herein as platforms 320) shown in **figure 3****.** As mentioned above, the platforms may be autonomous platforms, in particular autonomous vehicles, submarines or flying objects, such as drones. Monitoring the performance data may be performed on the platform, e.g. by control system included in the platform.

In step 120, one or more performance criteria, e.g. performance thresholds are determined for the AI model. The performance criteria or performance thresholds are determined based on a predetermined set of rules provided by a central server communicatively coupled to the platform. The central server may be the central server 310 shown in **figure 3****.**

In the illustrated embodiment - and any other embodiment described herein - the terms "performance threshold(s)" and "performance criterion/criteria" may be interchangeably used. For example, features referring to one or more thresholds being determined and compared to performance data may be replaced by features referring to one or more criteria being determined and compared to performance data.

The performance thresholds may comprise an upper and/or lower limit for the performance data monitored in step 110 or any other measure to evaluate or assess the performance data monitored in step 110. The one or more performance criteria may include any criteria or measure suitable to evaluate the performance of the algorithm and/or AI model. For example, the one or more performance criteria may comprise the existence/containment of a certain (number of) value(s) or type of value(s) within the performance data. In other words, based on the comparison with the performance criteria, it may be determined whether - and an alert event may be triggered if - the performance data does (not) contain, is (not) equal to or has another relation to a certain value, certain type of value or certain number of values. For example, it may be determined whether the performance data comprises (a specific value of) output data of the AI model, such as a prediction, a confidence of a prediction (in particular a mean uncertainty of a prediction), a classification (in particular a prediction for a classification, e.g. of a tracked object) and/or bounding boxes (of a tracked object).

The predetermined set of rules may be determined in step 210 of a method 200 for determining the performance thresholds shown in **figure 2****.** The set of rules may be determined by the central server, e.g. the central server 310. The set of rules may, for example, indicate a requirement that a confidence for a prediction shall be higher than a threshold (i.e. that the model has to have a clear vote for an object classification), that a mean uncertainty of a prediction shall be larger than a threshold, that a classification of a tracked object shall not change over time, and/or that the bounding boxes in subsequent sensor data (image) frames shall be stable within a certain range.

A rule of the set of rule may be determined based on characteristics of the platform for which the rule is provided, the AI model that is deployed on the platform for which the rule is provided, i.e. the AI model for which the rule is provided, and/or the input data and/or the output data of the AI model for which the rule is provided. In one example, the rule may comprise at least one of, e.g. all of, a platform identifier (asset_rl), a model identifier deployed on the platform (model_rl), an input data or statistic identifier (e.g. number of pixels), an output data or statistic identifier (e.g. uncertainty), a relation keyword identifier (e.g. exceeds) and a value or threshold identifier (e.g. 0.2). In other words, the set of rules determined in step 210 may comprise the threshold determined in step 120 or 240.

In step 220, the set of rules determined by the central server is provided, e.g. transmitted, to the platform, e.g. the platform 320A. Based on the provided set of rules, the performance thresholds are determined in step 240 (step 120 of method 100 shown in **figure 1****).**

Additionally, or alternatively, the set of rules determined in step 210 and provided in step 220 may comprise an ontology for defining and/or determining the performance thresholds. For example, the ontology may comprise a set of AI model input and/or output data or statistics and thresholds (e.g. relations, such as greater or lower as, and threshold values). The ontology included in the set of rules may be determined in step 210 based on characteristics of the platform to which the set of rules is provided and/or the AI model for which the set of rules is provided. More particularly, the ontology may be based on a specific application or operation of the platform and/or AI model.

The ontology included in the set of rules may be used by an operator of the platform and/or by a developer of the AI model run on the platform to create one or more rules and, thus, one or more thresholds to be applied to the AI model (or the respective performance output). By providing the ontology rather than specific rules and/or threshold, the rules and/or thresholds may be customised by the operator or developer, and may be applied at a specific time or for a specific time range during the deployment and/or development of the AI model. Hence, control over the rules and/or thresholds that will eventually result in the triggering of an alert, is decentralised (i.e. given to the operator of the platform), whilst ensuring (by providing the ontology) that the set of rules and/or thresholds are sensible/useful for the platform, the AI mode and/or its area of application. Hence, no unnecessary and/or contradictory thresholds may be creatable. Moreover, the processing of alerts may be performed more efficiently, if all of the underlying rules and/or thresholds fulfil specific requirements defined by the ontology. Moreover, the ontology may represent or include recommendations for a user or operator which thresholds and/or rules are to be applied to the performance data.

Put differently, the ontology may include one or more (different types of) output statistics (e.g. uncertainty), one or more (different types of) input statistics (e.g. number of pixels), one or more (different types of) relation keywords (e.g. exceeds) and/or one or more (different types of) threshold values. In one example, new output statistics, input statistics, relation keywords and threshold values may be (dynamically) added to the ontology, e.g. by an operator of the central server or by an additional (specially designed) AI model.

As indicated in **figure 2****,** determining the performance thresholds in step 240 may further be based on the monitoring of output data of a compute graph, as performed in step 230. The compute graph may comprise the AI model deployed on the platform. The output data of the compute graph may comprise output data of parent nodes and/or dependent nodes of the AI model. Additionally, or alternatively, the output data of the compute graph may be output data of a different AI model deployed on the same platform or a different platform (e.g. on a different platform operating in the same or a similar area and/or performing a same or similar task or application).

For example, the set of rules provided in step 220 may comprise variables for output data of the compute graph monitored in step 230. More particularly, the performance thresholds determined in step 240 may be based on, i.e. may be dependent on, the output data of the compute graph. For example, based on the performance thresholds, the output data of the AI model performed on the platform is compared to output data of the compute graph. In a further example, performance statistics of a first AI model deployed on a first platform operating in an application area (for example tracking objects within a specific area) may be compared to performance statistics of a second AI model deployed on the second platform operating in the same application area. The comparison may indicate whether the AI model functions reliably.

Subsequent to the determination of the performance thresholds in step 120 or 240, the monitored performance data is compared in step 130 to the one or more performance thresholds. For example, it may be determined, whether the monitored performance data meets the one or more performance thresholds indicated by, or determined based on, the provided set of rules.

In step 140, an alert event is triggered based on the comparison performed in step 130. The trigger event may indicate that one or more monitored data meets one or more of the determined thresholds and/or that a critical number of determined thresholds is met by the monitored data.

Additionally, or alternatively, it may be indicated that a relatively high number of thresholds are met and, thus, a relatively high number of alert events is triggered. Put yet another way, an alert event indicating and alerting overload may be triggered in order to prevent performance problems on the central server or the platform due to the relatively high number of alerts.

Additionally or alternatively, an (additional) alert event may be triggered if a certain number of particularly relevant, i.e. relatively high prioritised, thresholds are met, thereby indicating or classifying the urgency or severity of the alert events.

Triggering an alert in step 140 comprises transmitting an alert, from the platform, e.g. platform 320A, to the central server, e.g. central server 310, and/or storing the alert, for example on the platform and/or the central server. The alerts may be reviewed by operators (users) of the central server of and/or the platform via an operating system (in particular a user interface of the operating system).Once stored on the platform and/or the central server, an access restriction may be applied to the stored alert. The access restriction to the stored alert may be determined based on access restrictions to provenance data of the alert, i.e. access restrictions to the AI model or the platform underlying the alert event.

**Figure 3** shows the system 300 comprising the central 310 server, the first platform 320A and the second platform 320B. The first platform 320A comprises an alerting system 321A, a control system 322A, an operating system 323A and a storage system 324A. The second platform 320B may likewise comprise an alerting system, a control system, an operating system and/or a storage system similar to the systems included in the first platform 320A. The central server 310 may, in some embodiments, comprise at least one of an alerting system 311, a control system 312, an operating system 313 and a storage system 314, if required.

As described with reference to **figures 1** **and** **2****,** a set of rules may be provided by the central server 310 to the first platform 320A, in particular transmitted by the control system 312 to the control system 322A. The set of rules may be provided by transmitting first data 330A from the central server to the first platform 320A comprising the set of rules provided for the first platform 320A and/or the AI model performed on the first platform 320A. The set of rules included in the first data 330A may comprise the thresholds determined in step 120 or step 240 as illustrated in **figures 1** **and** **2****.** An operator or controller of the first platform 320A may determine and/or configure the thresholds via the operating system 313 of the central server 310.

Additionally, or alternatively, the first data 330A may comprise an ontology for determining one or more performance thresholds as described in more detail above. Based on the ontology, an operator of the first platform 320A may determine one or more thresholds via the operating system 323A.

The determined thresholds may be compared to performance data of the AI model deployed on the first platform 320A by the control system 322A. The performance data of the AI model may be monitored by the control system 322A. Monitoring and controlling, i.e. comparing, the performance data on the platform 320A allows for an operation independent of the central server 310, e.g. in environments where communication to the central server 310 is disturbed or interrupted. Alternatively, controlling, i.e. comparing, the performance data may be performed by the central server 310 after having received performance data monitored by the first platform 320A.

Based on the comparison, an alert may be triggered by alerting system 321A (or, alternatively by alerting system 311). Triggering the alert may comprise transmitting an alert from the first platform 320A to the central server 310 via second data 340A, in particular to the alerting system 311, and/or storing the alert in the storage system 324A and/or the storage system 314. The alert may include meta data, such as a timestamp, a rule identifier that triggered the alert and/or details to the performance data that triggered the alert.

Similarly, a set of rules may be provided to the second platform 320B via third data 330B. An alert triggered by the second platform 320B may be transmitted to the central server 310 via fourth data 340B.

The alert sent via second data 340A or fourth data 340B may comprise a time and/or location at which the alert event was triggered, the monitored data underlying the trigger event and the one or more thresholds, and/or rules of the set of rules underlying the trigger event. The alerts may be used to locally or centrally improve the AI models deployed on the first and/or second platform 320A and 320B, for example to actively re-labelling objects tracked by one or more of the AI models. For example, when received at the central server 310, alerts may be used to evaluate and/or improve similar AI models deployed on other platforms.

The alert may be centrally processed on the central server 310 and/or locally on the first platform 320A. For example, the alert may be notified to an operator of the platform via the operating system 323A and/or the operating system 313.

The system illustrated in **figure 3** allows for automated performance problem detection of AI models deployed on a plurality of platforms, wherein the performance problems may be centrally assessed/processed by central server in a time and resource efficient manner.

## Claims

1. A computer implemented method comprising:
monitoring (110), by a platform (320A), wherein the platform (320A) is an edge device of a computing system (300) comprising a central server communicatively coupled to the platform (320A), performance data of an algorithm and/or artificial intelligence, AI, model deployed on the platform (320A);
based on a predetermined set of rules (330A) provided by the central server, determining (120, 240) one or more performance criteria, comprising one or more performance thresholds, for the algorithm and/or AI model, wherein the set of rules (330A) is associated with the algorithm, the AI model and/or the platform (320A);
comparing (130), by the platform (320A), the monitored performance data to the one or more performance criteria;
triggering (140) an alert event based on the comparison of the monitored data to the one or more performance criteria, wherein triggering (140) the alert event comprises transmitting (150) the alert from the platform to the central server, wherein transmitting (150) the alert comprises including
the monitored performance data underlying the trigger event and the one or more performance criteria; and
amending, based on the alert, the same algorithms and/or AI models deployed on all of a plurality of platforms.

2. The computer implemented method of the preceding claim, wherein the steps of monitoring (110) the data, determining (120) the one or more performance criteria and comparing (130) the monitored data to the one or more performance criteria is performed by the platform.

3. The computer implemented method of any of the preceding claims, wherein the step of triggering (140) the alert event is performed by the platform, in particular by an alerting system comprised by the platform.

4. The computer implemented method of any of the preceding claims, wherein the performance data comprises input and/or output data.

5. The computer implemented method of any of the preceding claims, wherein triggering (140) the alert event comprises:
transmitting (150) an alert from the platform to the central server, preferably indicating at least one of
a time and/or location at which the alert event was triggered, and/or
rules of the set of rules underlying the trigger event;
transmitting (150) a, or the, alert to an operator of the platform and/or to a control system of the platform and/or
storing (160) a, or the, alert on the platform and/or the central server.

6. The computer implemented method of any of the preceding claims, wherein the set of rules and/or the criteria are determined (210) by an operator of the platform and/or (pre)determined (210) based on one or more characteristics of the platform, the deployed algorithm and/or the AI model.

7. The computer implemented method of any of the preceding claims, wherein the set of rules comprises an ontology for defining and/or determining the performance criteria.

8. The computer implemented method of any of the preceding claims, further comprising:
applying (170) an access restriction to a, or the, stored alert based on access restrictions to the platform, the algorithm and/or AI model and/or the monitored data.

9. The computer implemented method of any of the preceding claims, wherein triggering (140) an alert event comprises:
indicating that one or more of the monitored data meets one or more of the determined criteria, in particular exceeds or falls below one or more of the determined thresholds; and/or
indicating that a, preferably predetermined, critical number of determined criteria is met by the monitored data.

10. The computer implemented method of any of the preceding claims, wherein the one or more determined criteria are each associated with a respective priority level, and wherein triggering an alert event comprises:
indicating that a, preferably predetermined, critical number of determined criteria above a certain, in particular predetermined, priority level is met by the monitored data.

11. The computer implemented method of any of the preceding claims, wherein the algorithm and/or AI model is a first algorithm and/or AI model and wherein the method further comprises:
monitoring (210) output data of a compute graph, in particular a second algorithm and/or AI model of the compute graph, the compute graph comprising the first AI model;
wherein the one or more performance criteria are determined (120, 240) based on the output data of the compute graph.

12. The computer implemented method of any of the preceding claims, wherein the algorithm and/or AI model is a first algorithm and/or AI model and wherein the one or more performance criteria are determined (120, 240) based on output data of a second algorithm and/or AI model, in particular of a second algorithm and/or AI model deployed on the same or another platform.

13. A data processing platform (320A, 320B) comprising means adapted to carry out the method of any of the preceding claims.

14. A data processing system (300) comprising a central server (310) and the platform of claim 13, the system comprising means adapted to carry out the method of any of the preceding claims.

15. A computer-readable medium (314, 324) comprising instructions which, when executed by a data processing device or system, in particular the platform of claim 13 or the system of claim 14, cause the data processing device or system to carry out the method of claims 1-12.

## Patentansprüche

1. Computerimplementiertes Verfahren, das Folgendes beinhaltet:
Überwachen (110), durch eine Plattform (320A), wobei die Plattform (320A) ein Edge-Gerät eines Rechensystems (300) ist, das einen zentralen Server umfasst, der kommunikativ mit der Plattform (320A) gekoppelt ist, von Leistungsdaten eines Algorithmus und/oder eines auf der Plattform (320A) eingesetzten AI-(Articifial Intelligence)-Modells;
Bestimmen (120, 240), auf der Basis eines vom zentralen Server bereitgestellten vorbestimmten Regelsatzes (330A), eines oder mehrerer einen oder mehrere Leistungsschwellenwerte umfassender Leistungskriterien für den Algorithmus und/oder das AI-Modell, wobei der Regelsatz (330A) mit dem Algorithmus, dem AI-Modell und/oder der Plattform (320A) assoziiert ist;
Vergleichen (130), durch die Plattform (320A), der überwachten Leistungsdaten mit den ein oder mehreren Leistungskriterien;
Auslösen (140) eines Alarmereignisses auf der Basis des Vergleichs der überwachten Daten mit den ein oder mehreren Leistungskriterien, wobei das Auslösen (140) des Alarmereignisses das Übertragen (150) des Alarms von der Plattform zum zentralen Server beinhaltet, wobei das Übertragen (150) des Alarms das Einbeziehen der dem Auslöseereignis zugrunde liegenden überwachten Leistungsdaten und der ein oder mehreren Leistungskriterien beinhaltet; und
Ändern, auf der Basis des Alarms, der gleichen Algorithmen und/oder AI-Modelle, die auf allen einer Mehrzahl von Plattformen eingesetzt werden.

2. Computerimplementiertes Verfahren nach dem vorherigen Anspruch, wobei die Schritte des Überwachens (110) der Daten, des Bestimmens (120) der ein oder mehreren Leistungskriterien und des Vergleichens (130) der überwachten Daten mit den ein oder mehreren Leistungskriterien durch die Plattform durchgeführt werden.

3. Computerimplementiertes Verfahren nach einem der vorherigen Ansprüche, wobei der Schritt des Auslösens (140) des Alarmereignisses durch die Plattform, insbesondere durch ein in der Plattform enthaltenes Alarmsystem, durchgeführt wird.

4. Computerimplementiertes Verfahren nach einem der vorherigen Ansprüche, wobei die Leistungsdaten Ein- und/oder Ausgangsdaten umfassen.

5. Computerimplementiertes Verfahren nach einem der vorherigen Ansprüche, wobei das Auslösen (140) des Alarmereignisses Folgendes beinhaltet:
Übertragen (150) eines Alarms von der Plattform zum zentralen Server, vorzugsweise unter Angabe von mindestens einem von
einem Zeitpunkt und/oder einem Ort, zu/an dem das Alarmereignis ausgelöst wurde, und/oder
Regeln des Regelsatzes, der dem Auslöseereignis zugrunde liegt;
Übertragen (150) eines oder des Alarms zu einem Betreiber der Plattform und/oder zu einem Steuersystem der Plattform und/oder
Speichern (160) eines oder des Alarms auf der Plattform und/oder dem zentralen Server.

6. Computerimplementiertes Verfahren nach einem der vorherigen Ansprüche, wobei der Regelsatz und/oder die Kriterien von einem Betreiber der Plattform bestimmt (210) und/oder auf der Basis von einer oder mehrerer Charakteristiken der Plattform, des eingesetzten Algorithmus und/oder des AI-Modells (vor)bestimmt (210) werden.

7. Computerimplementiertes Verfahren nach einem der vorherigen Ansprüche, wobei der Regelsatz eine Ontologie zum Definieren und/oder Bestimmen der Leistungskriterien umfasst.

8. Computerimplementiertes Verfahren nach einem der vorherigen Ansprüche, das ferner Folgendes beinhaltet:
Anwenden (170) einer Zugriffsbeschränkung auf einen oder den gespeicherten Alarm auf der Basis von Zugriffsbeschränkungen auf die Plattform, den Algorithmus und/oder das AI-Modell und/oder die überwachten Daten.

9. Computerimplementiertes Verfahren nach einem der vorherigen Ansprüche, wobei das Auslösen (140) eines Alarmereignisses Folgendes beinhaltet:
Angeben, dass ein oder mehrere der überwachten Daten eine oder mehrere der bestimmten Kriterien erfüllen, insbesondere einen oder mehrere der bestimmten Schwellenwerte über- oder unterschreiten; und/oder
Angeben, dass eine, vorzugsweise vorbestimmte, kritische Anzahl bestimmter Kriterien durch die überwachten Daten erfüllt wird.

10. Computerimplementiertes Verfahren nach einem der vorherigen Ansprüche, wobei die ein oder mehreren bestimmten Kriterien jeweils mit einer jeweiligen Prioritätsstufe assoziiert sind, und wobei das Auslösen eines Alarmereignisses Folgendes beinhaltet:
Angeben, dass eine, vorzugsweise vorbestimmte, kritische Anzahl bestimmter Kriterien über einer gewissen, insbesondere vorbestimmten, Prioritätsstufe durch die überwachten Daten erfüllt wird.

11. Computerimplementiertes Verfahren nach einem der vorherigen Ansprüche, wobei der Algorithmus und/oder das AI-Modell ein erster/s Algorithmus und/oder AI-Modell ist, und wobei das Verfahren ferner Folgendes beinhaltet:
Überwachen (210) von Ausgangsdaten eines Rechengraphen, insbesondere eines zweiten Algorithmus und/oder AI-Modells des Rechengraphen, wobei der Rechengraph das erste AI-Modell umfasst;
wobei die ein oder mehreren Leistungskriterien auf der Basis der Ausgangsdaten des Rechengraphen bestimmt werden (120, 240).

12. Computerimplementiertes Verfahren nach einem der vorherigen Ansprüche, wobei der Algorithmus und/oder das AI-Modell ein erster/s Algorithmus und/oder AI-Modell ist, und wobei die ein oder mehreren Leistungskriterien (120, 240) auf der Basis von Ausgangsdaten eines zweiten Algorithmus und/oder AI-Modells, insbesondere eines auf derselben oder einer anderen Plattform eingesetzten zweiten Algorithmus und/oder AI-Modells bestimmt werden.

13. Datenverarbeitungsplattform (320A, 320B) mit Mitteln, die zum Durchführen des Verfahrens nach einem der vorherigen Ansprüche ausgelegt sind.

14. Datenverarbeitungssystem (300) mit einem zentralen Server (310) und der Plattform nach Anspruch 13, wobei das System Mittel umfasst, die zum Durchführen des Verfahrens nach einem der vorherigen Ansprüche ausgelegt sind.

15. Computerlesbares Medium (314, 324), das Befehle umfasst, die bei Ausführung durch ein Datenverarbeitungsgerät oder -system, insbesondere die Plattform nach Anspruch 13 oder das System nach Anspruch 14, das Datenverarbeitungsgerät oder -system zum Durchführen des Verfahrens nach den Ansprüchen 1 bis 12 veranlassen.

## Revendications

1. Procédé mis en œuvre par ordinateur, comprenant les étapes consistant à :
surveiller (110), par une plateforme (320A), la plateforme (320A) étant un dispositif de périphérie d'un système informatique (300) comprenant un serveur central couplé en communication à la plateforme (320A), des données de performance d'un algorithme et/ou d'un modèle d'intelligence artificielle, IA, déployé sur la plateforme (320A) ;
sur la base d'un ensemble prédéterminé de règles (330A) fournies par le serveur central, déterminer (120, 240) un ou plusieurs critères de performance, comprenant un ou plusieurs seuils de performance, pour l'algorithme et/ou le modèle d'IA, l'ensemble de règles (330A) étant associé à l'algorithme, au modèle d'IA et/ou à la plateforme (320A) ;
comparer (130), par la plateforme (320A), les données de performance surveillées au ou aux critères de performance ;
déclencher (140) un événement d'alerte sur la base de la comparaison des données surveillées au ou aux critères de performance, le déclenchement (140) de l'événement d'alerte comprenant l'étape consistant à transmettre (150) l'alerte de la plateforme au serveur central, la transmission (150) de l'alerte comprenant l'étape consistant à inclure les données de performance surveillées sous-jacentes à l'événement de déclenchement et au ou aux critères de performance ; et
modifier, sur la base de l'alerte, les mêmes algorithmes et/ou modèles d'IA déployés sur la totalité des plateformes d'une pluralité de plateformes.

2. Procédé mis en œuvre par ordinateur selon la revendication précédente, les étapes de surveillance (110) des données, de détermination (120) du ou des critères de performance et de comparaison (130) des données surveillées au ou aux critères de performance étant réalisées par la plateforme.

3. Procédé mis en œuvre par ordinateur selon l'une quelconque des revendications précédentes, l'étape de déclenchement (140) de l'événement d'alerte étant réalisée par la plateforme, en particulier par un système d'alerte compris par la plateforme.

4. Procédé mis en œuvre par ordinateur selon l'une quelconque des revendications précédentes, les données de performance comprenant des données d'entrée et/ou de sortie.

5. Procédé mis en œuvre par ordinateur selon l'une quelconque des revendications précédentes, le déclenchement (140) de l'événement d'alerte comprenant les étapes consistant à :
transmettre (150) une alerte de la plateforme au serveur central, indiquant de préférence au moins un élément parmi :
une heure et/ou un lieu où l'événement d'alerte a été déclenché, et/ou
des règles de l'ensemble de règles sous-jacentes à l'événement déclencheur ;
transmettre (150) une alerte ou l'alerte à un opérateur de la plateforme et/ou à un système de commande de la plateforme et/ou
stocker (160) une alerte ou l'alerte sur la plateforme et/ou le serveur central.

6. Procédé mis en œuvre par ordinateur selon l'une quelconque des revendications précédentes, l'ensemble de règles et/ou les critères étant déterminés (210) par un opérateur de la plateforme et/ou (pré)déterminés (210) sur la base d'une ou plusieurs caractéristiques de la plateforme, de l'algorithme déployé et/ou du modèle d'IA.

7. Procédé mis en œuvre par ordinateur selon l'une quelconque des revendications précédentes, l'ensemble de règles comprenant une ontologie permettant de définir et/ou de déterminer les critères de performance.

8. Procédé mis en œuvre par ordinateur selon l'une quelconque des revendications précédentes, comprenant en outre l'étape consistant à :
appliquer (170) une restriction d'accès à une adresse stockée ou à l'adresse stockée, sur la base de restrictions d'accès à la plateforme, à l'algorithme et/ou au modèle d'IA et/ou aux données surveillées.

9. Procédé mis en œuvre par ordinateur selon l'une quelconque des revendications précédentes, le déclenchement (140) d'un événement d'alerte comprenant les étapes consistant à :
indiquer qu'une ou plusieurs des données surveillées satisfont à un ou plusieurs des critères déterminés, en particulier qu'elles sont supérieures ou inférieures à un ou plusieurs des seuils déterminés ; et/ou
indiquer qu'un nombre critique, de préférence prédéterminé, de critères déterminés est satisfait par les données surveillées.

10. Procédé mis en œuvre par ordinateur selon l'une quelconque des revendications précédentes, le ou les critères déterminés étant chacun associés à un niveau de priorité respectif, et le déclenchement d'un événement d'alerte comprenant l'étape consistant à :
indiquer qu'un nombre critique, de préférence prédéterminé, de critères déterminés supérieurs à un certain niveau de priorité, en particulier prédéterminé, est satisfait par les données surveillées.

11. Procédé mis en œuvre par ordinateur selon l'une quelconque des revendications précédentes, l'algorithme et/ou le modèle d'IA étant un premier algorithme et/ou modèle d'IA et le procédé comprenant en outre l'étape consistant à :
surveiller (210) les données de sortie d'un graphe de calcul, en particulier un second algorithme et/ou modèle d'IA du graphe de calcul, le graphe de calcul comprenant le premier modèle d'IA ;
le ou les critères de performance étant déterminés (120, 240) sur la base des données de sortie du graphe de calcul.

12. Procédé mis en œuvre par ordinateur selon l'une quelconque des revendications précédentes, l'algorithme et/ou le modèle d'IA étant un premier algorithme et/ou modèle d'IA et le ou les critères de performance étant déterminés (120, 240) sur la base de données de sortie d'un second algorithme et/ou modèle d'IA, en particulier d'un second algorithme et/ou modèle d'IA déployé sur la même plateforme ou sur une autre plateforme.

13. Plateforme de traitement de données (320A, 320B) comprenant un moyen conçu pour mettre en œuvre le procédé selon l'une quelconque des revendications précédentes.

14. Système de traitement de données (300) comprenant un serveur central (310) et la plateforme selon la revendication 13, le système comprenant un moyen conçu pour mettre en œuvre le procédé selon l'une quelconque des revendications précédentes.

15. Support lisible par ordinateur (314, 324) comprenant des instructions qui, lorsqu'elles sont exécutées par un dispositif ou un système de traitement de données, en particulier la plateforme selon la revendication 13 ou le système selon la revendication 14, amènent le dispositif ou le système de traitement de données à mettre en œuvre le procédé selon les revendications 1 à 12.
